# EUROPEAN PATENT SPECIFICATION

(11) **EP 1 406 848 B1**
(45) Date of publication and mention of the grant of the patent: **30.08.2006**
(21) Application number: 02736803.4
(22) Date of filing: 17.05.2002
(51) Int. Cl.: C03C 25/10, D06M 11/76, D06M 11/82, D06M 11/45, D06M 23/06, E04B 1/76

(54) **THERMAL INSULATION CONTAINING SUPPLEMENTAL INFRARED RADIATION ABSORBING MATERIAL**
WÄRMEDÄMMUNG MIT ZUSÄTZLICHEM INFRAROTSTRAHLUNG ABSORBIERENDEN MATERIAL
ISOLATION THERMIQUE CONTENANT UN MATERIAU SUPPLEMENTAIRE ABSORBANT LES RAYONNEMENTS INFRAROUGE

(30) Priority: 17.05.2001 US 858471
(43) Date of publication of application: 14.04.2004
(73) Proprietor: SAINT-GOBAIN ISOVER, 92400 Courbevoie (FR)
(72) Inventor: TOAS, Murray, S., Norristown, PA 19401 (US); MANKELL, Kurt, Blue Bell, PA 19422 (US); YANG, Alain, Bryn Mawr, PA 19010 (US); GALLAGHER, Kevin, Plymouth Meeting, PA 19462 (US); OBER, Dave, Doylestown, PA 18901 (US); TRIPP, Gary, Corbin, KY 40701 (US); MONTOYA, Eladio, F-75003 Paris (FR); BERNARD, Jean-Luc, F 60600 Breuil le Vert (FR)
(74) Representative: Poulin, Gérard
(86) International application number: PCT/US2002/015133
(87) International publication number: WO 2002/092528

(56) References cited:
- EP-A- 0 808 953
- EP-A- 0 936 060
- EP-A- 0 936 198
- WO-A-97/20780
- US-A- 5 869 407
- US-A- 6 086 998

## Description

### BACKGROUND OF THE INVENTION

### 1. Field of the Invention:

This invention relates to thermal insulation. More specifically, this invention relates to thermal insulation containing infrared radiation ("IR") absorbing and scattering material, which reduces radiative heat transfer through the thermal insulation.

### 2. Description of Related Art:

Heat passes between two surfaces having different temperatures by three mechanisms: convection, conduction and radiation. These heat transfer mechanisms are combined in a quantitative measure of heat transfer known as "apparent thermal conductivity."

Insertion of glass fiber thermal insulation in the gap between two surfaces reduces convection as a heat transport mechanism because the insulation slows or stops the circulation of air. Heat transfer by conduction through the glass fiber of the insulation is also minimal. However, many glass compositions used in glass fiber insulation products are transparent in portions of the infrared spectrum. Thus, even when the gap between surfaces has been filled with glass fiber thermal insulation, radiation remains as a significant heat transfer mechanism. Typically, radiation can account for 10 to 40% of the heat transferred between surfaces at room (e.g., 24°C) temperature.

Fiber to fiber radiative heat transfer is due to absorption, emission and scattering. The amount of radiative heat transfer between fibers due to emission and absorption is dependent on the difference in fiber temperatures, with each fiber temperature taken to the fourth power.

To reduce radiative heat loss through thermal insulation, a number of approaches have been considered.

U.S. Patent No. 2,134,340 discloses that multiple reflections of infrared radiation from a powder of an infrared transparent salt, such as calcium fluoride, added to glass fiber insulation can prevent the infrared radiation from penetrating any substantial distance into the insulation.

U.S. Patent No. 5,633,077 discloses that an insulating material combining certain chiral polymers with fibers can block the passage of infrared radiation through the insulating material.

U.S. Patent No. 5,932,499 discloses that glass fiber compositions displaying decreased far infrared radiation transmission may be produced from soda-lime borosilicate glasses having a high boron oxide content and a low concentration of alkaline earth metal oxides.

There remains a need for a cost effective thermal insulation product that can reduce radiative heat loss.

### SUMMARY OF THE INVENTION

A thermal insulation product is provided in which an IR absorbing and scattering material is dispersed on fibers arranged in a porous structure. Said thermal insulation product is defined in claim 1. Preferred embodiments of said thermal insulation product are as defined in dependant claims 2 to 15. The IR absorbing and scattering material can be applied to the fibers before or after the fibers are formed into the porous structure. The IR absorbing and scattering material substantially reduces the radiative heat loss through the thermal insulation. Inclusion of the IR absorbing and scattering material improves the effective wavelength range over which the porous structure absorbs infrared radiation and improves its overall extinction efficiency. The IR absorbing and scattering material is about as effective as glass fiber in reducing radiative heat loss through a porous fiber structure, but can be much less expensive than glass fiber. Hence, the IR absorbing and scattering material can provide a cost-effective means of improving thermal insulation.

The invention is also related to the use of an infrared absorbing and scattering material comprising at least one compound selected from the group consisting of carbonate compounds, borate compounds, and alumina compounds to improve the thermal resistance of a thermal insulation product comprising fibers, the infrared absorbing and scattering material being dispersed on the fibers, wherein the product has a porous structure, and the infrared absorbing and scattering material is in the form of particles and at least 99% of the particles have a particle size of less than 10 µm.

Said use is defined in claim 16. Other uses are defined in independant claims 17 and 18.

Preferred embodiments of said uses are as defined in claims 19, 20 and 21. The invention further concerns a method of forming a thermal insulation product the method comprising :
dispersing on fibers an infrared absorbing and scattering material comprising at least one compound selected from the group consisting of carbonate compounds, borate compounds, and alumina compounds ; and
forming the fibers into a porous structure,
wherein the infrared absorbing and scattering material is in the form of particles and at least 99% of the particles have a particle size of less than 10 µm.

Said method is defined in claim 22.

Preferred embodiments of said method are as defined in claims 23 to 40. The dispersing may comprise soaking or spraying the fibers with a liquid mixture containing the infrared absorbing and scattering material.

The infrared absorbing and scattering material may be suspended in the liquid mixture. The dispersing may comprise mixing the infrared absorbing and scattering material and the fibers.

The dispersing may comprise mixing the infrared absorbing and scattering material and the fibers ; heating the infrared absorbing and scattering material ; and binding the fibers together with the infrared absorbing and scattering material. The mixing may comprise sucking or blowing a dry power of the infrared absorbing and scattering material into the porous structure.

The dispersing may comprise mixing the infrared absorbing and scattering material and the fibers with a binder ; heating the binder ; and binding the fibers and the infrared absorbing and scattering material together with the binder wherein mixing may comprise sucking or blowing the binder and a dry power of the infrared absorbing and scattering material into the porous structure.

### BRIEF DESCRIPTION OF THE DRAWINGS

The preferred embodiments of the invention will be described in detail, with reference to the following figures, wherein:
FIG. 1 shows the absorption spectra of silica, glass fiber, calcium carbonate and borax;
FIG. 2 shows a method of applying IR absorbing and scattering material to fibers;
FIG. 3 shows a method of adding IR absorbing and scattering material to an unbonded glass fiber mat;
FIG. 4 shows a method of applying IR absorbing and scattering material to fibers including recycled fiberglass; and
FIG. 5 shows a method of applying IR absorbing and scattering material to fibers.
FIG. 6 shows a method of forming pipe insulation by wrapping an insulation mat around a mandrel.

### DETAILED DESCRIPTION OF PREFERRED EMBODIMENTS

The present invention reduces the radiant transmission of heat through a fiber based thermal insulation product by dispersing an IR absorbing and scattering material onto the fibers. Because the IR absorbing and scattering material can be less expensive than the fiber, the substitution of the IR absorbing and scattering material for some of the fiber can lead to a significant cost reduction in thermal insulation.

A suitable IR absorbing and scattering material absorbs and scatters infrared radiation with a wavelength in the 4 to 40 µm range. Preferably, the IR absorbing and scattering material absorbs 6-8 µm (1667-1250 cm⁻¹) infrared radiation. The IR absorbing and scattering material can include borate compounds, carbonate compounds, alumina compounds, nitrate compounds and nitrite compounds. These compounds can be alkali metal salts or alkaline earth metal salts. Borate compounds, carbonate compounds and alumina compounds are preferred. Suitable borates include lithium borate, sodium borate, potassium borate, magnesium borate, calcium borate, strontium borate and barium borate. Preferably, the borate is sodium borate (i.e., borax, Na₂B₄O₅(OH)₄•8H₂O or Na₂B₄O₇•10H₂O) or colemanite (Ca₂B₆O₁₁•5H₂O). Suitable carbonates include lithium carbonate, sodium carbonate, potassium carbonate, calcium carbonate (i.e., calcite, CaCO₃), dolomite (CaMg(CO₃)₂), magnesium carbonate (i.e., magnesite, MgCO₃), strontium carbonate and barium carbonate. Preferably, the carbonate is calcium carbonate, dolomite, or magnesite. Suitable alumina compounds include hydrated alumina (Al₂O₃•3H₂O or Al(OH)₃) and alumina (Al₂O₃). ALCOA produces HYDRAL and B-303 particles of hydrated alumina.

The infrared absorbing and scattering material is useful in improving the thermal resistance of a porous thermal insulation product containing fibers. In particular, carbonate compounds and alumina compounds are useful in improving the thermal resistance of porous thermal insulation containing fibers at temperatures of 300°C or more or even 400°C or more.

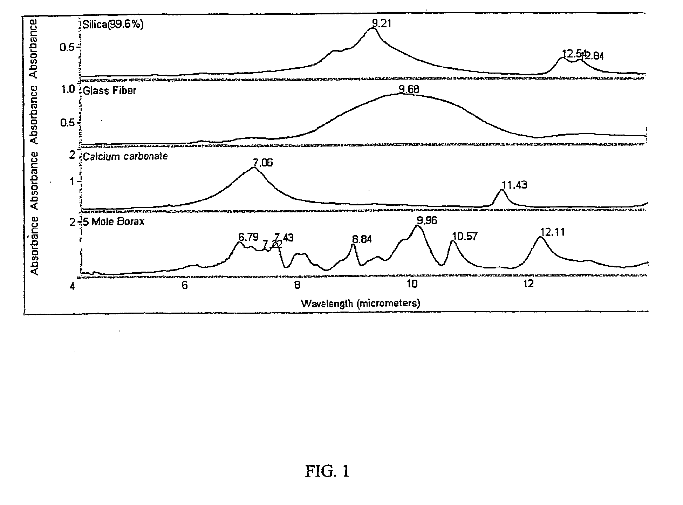

FIG. 1 shows the absorption spectra of borax and calcium carbonate. The absorption characteristics of borax and calcium carbonate complement those of glass fiber and silica, which have been used commercially in thermal insulation for over fifty years.

The amount of IR absorbing and scattering material in the thermal insulation product can range from 1 to 40 wt%, preferably from 2 to 30 wt%, more preferably from 4 to 20 wt%. If the amount of IR absorbing and scattering material is less than 1 wt%, then the reduction in radiative heat loss is negligible. If the amount of IR absorbing material is in excess of 40 wt%, then the IR absorbing and scattering material forms an undesirable amount of dust in the thermal insulation product.

The fibers in the thermal insulation product can be organic or inorganic. Organic fibers include cellulose fibers; cellulosic polymer fibers, such as rayon; thermoplastic polymer fibers, such as polyester; animal fibers, such as wool; and vegetable fibers, such as cotton. Preferably, the fibers are inorganic. Inorganic fibers include rock wool and glass wool. Preferably, the inorganic fibers comprise a glass.

The fibers form a porous structure. The porous structure can be woven or nonwoven. Preferably, the porous structure is nonwoven. The nonwoven fibers can be in the form of a batt, mat or blanket. A preferred porous structure is that found in FIBERGLASS.

Along with the fibers and IR absorbing and scattering material, the thermal insulation product can include a binder to capture and hold the fibers and IR absorbing material together. The binder can be a thermosetting polymer, a thermoplastic polymer, or an inorganic bonding agent. Preferably, the thermosetting polymer is a phenolic resin, such as a phenol-formaldehyde resin. The thermoplastic polymer will soften or flow upon heating to capture the fibers and IR absorbing and scattering material, and upon cooling and hardening will hold the fibers and IR absorbing and scattering material together. In embodiments of the present invention, the IR absorbing and scattering material can itself bond fibers together and thus render the addition of a binder unnecessary. When binder is used in the thermal insulation product, the amount of binder can be from 1 to 35 wt%, preferably from 3 to 30 wt%, more preferably from 4 to 25 wt%.

The thermal insulation product of the present invention can be formed by dispersing the IR absorbing and scattering material on to the surface of fibers, and by forming the fibers into a porous structure. The dispersed IR absorbing and scattering material can be in the form of particles. The optimum particle size is around 4 µm. Preferably 99% of the particles are less than 10 µm in size. The infrared absorbing and scattering material can be dispersed on the fibers before or at the same time or after the fibers are formed into the porous structure. Methods of forming fibers into porous structures are well known to the skilled artisan and will not be repeated here in detail.

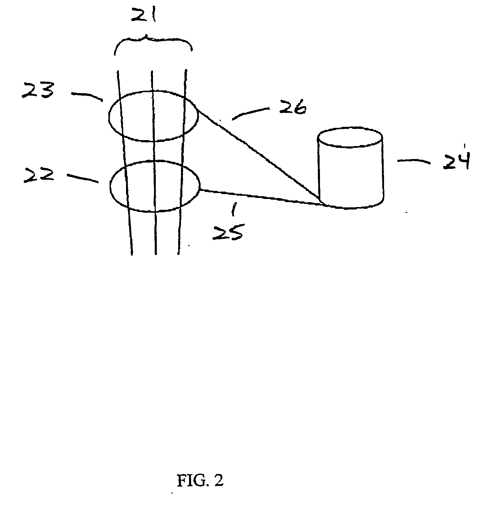

FIG. 2 shows a method of depositing IR absorbing and scattering material on glass fibers. Glass fibers 21 pass through a water overspray ring 23 and a binder application ring 22. Tank 24 is connected via lines 25 and 26 to rings 22 and 23, respectively. In tank 24 an IR absorbing and scattering material is dissolved or suspended in a liquid mixture. The IR absorbing and scattering material is applied to the glass fibers 21 by injecting the liquid mixture from tank 24 into the binder application ring 22 and/or the water overspray ring 23. The liquid mixture can include water and various surfactants and suspension agents. If the IR absorbing and scattering material is not completely dissolved in the liquid mixture, the liquid mixture must be agitated to keep the IR absorbing and scattering material in suspension. The spray nozzles in rings 22 and 23 have nozzle orifices large enough to permit undissolved IR absorbing and scattering materials to pass through the nozzles without clogging.

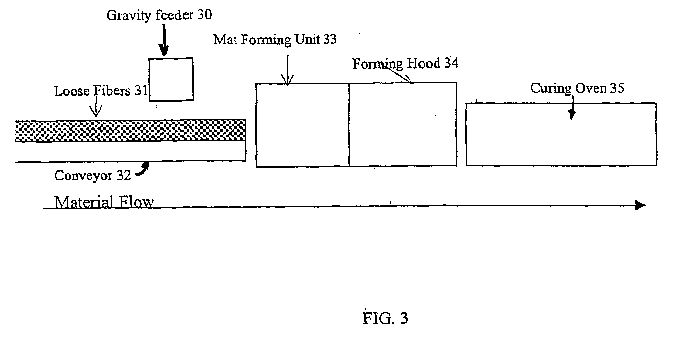

FIG. 3 shows an embodiment in which binder and IR absorbing and scattering material are dispersed from gravity feeder 30 on top of loose fibers 31 that have been distributed across the width of a conveyor 32 to form a porous mat. The IR absorbing and scattering material is introduced into the porous mat separately from or premixed with a binder. The binder can be a dry powder. The fibers with binder and IR absorbing and scattering material dispersed on the fibers then pass through a mat forming unit 33 where they are mixed and delivered into the air lay forming hood 34. The binder and IR absorbing and scattering material may also be added at the mat forming unit 33. The mix is then collected through negative pressure on another conveyor (not shown) and transported into a curing oven 15. When passed through curing oven 35, the binder melts, cures, and binds together the IR absorbing material and fiber.

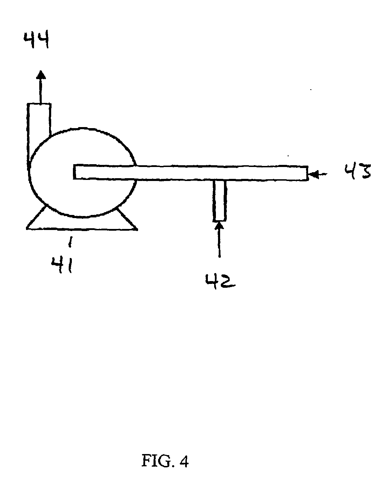

FIG. 4 shows an embodiment in which a recycling fan 41 is used to suck in and mix IR absorbing material (e.g., calcium carbonate powder) from fan intake 42 and recycled glass fiber from fan intake 43. The IR absorbing and scattering material and recycled glass fibers are blown from fan 41 at exit 44 into a forming hood (not shown). There the mixture is dispersed on glass fiber, together with a binder, if necessary. After passing through a curing oven (not shown) the IR absorbing and scattering material materials and glass fibers are bonded together.

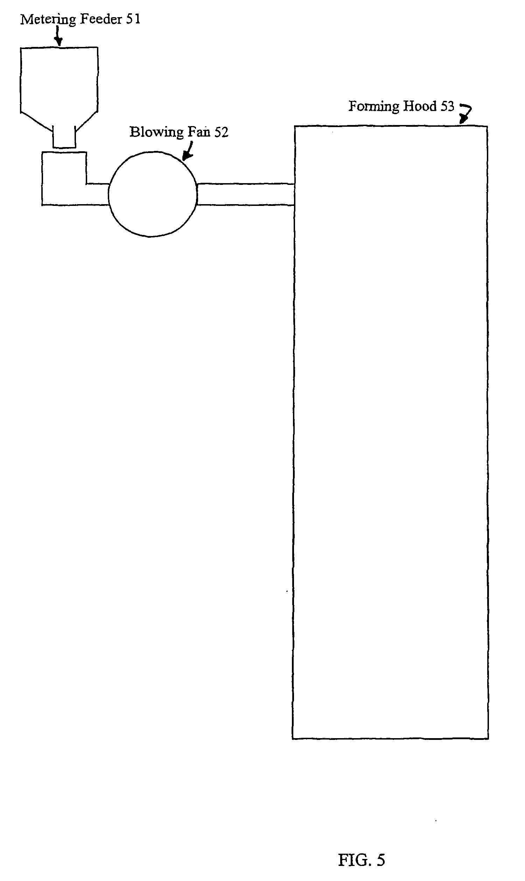

FIG. 5 shows an embodiment in which a metering feeder 51 feeds the dry, powder IR absorbing and scattering material into a blowing fan 52. The IR absorbing and scattering material is blown by the fan into the forming hood 53 and dispersed on glass fiber with a binder, if necessary. Multiple feeders and blowing fans may be used.

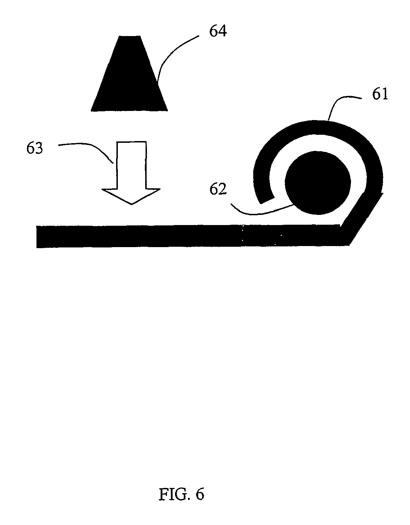

FIG. 6 shows embodiments in which thermal pipe insulation is produced by wrapping an insulation mat 61 around a hot mandrel or pipe 62 to form a section of pipe insulation having one or more layers of the insulation mat 61. Preferably the section of pipe insulation is cylindrical. Infrared absorbing and scattering material 63, in liquid or powder form, can be deposited by, e.g., spraying, onto the insulation mat 61 from a infrared absorbing and scattering material source 64 while the insulation mat 61 is on the mat production line and before the insulation mat 61 is wrapped around the mandrel 62. The infrared absorbing and scattering material preferably includes at least one carbonate or alumina compound.

### EXAMPLES

The following non-limiting examples will further illustrate the invention.

### Example 1

FIBERGLASS samples are prepared in a laboratory with either borax {Na₂B₄O₇•10H₂O} or calcium carbonate dispersed throughout as IR absorbing and scattering materials. The samples are 30.5 cm wide x 30.5 cm long x 2.5 cm thick. The IR absorbing materials are weighed and mixed in a solution of 30% isopropanol and 70% water. The borax is dissolved in the water using a mixer and a hot plate to form a borax solution. The calcium carbonate is mixed in the alcohol/water by hand to form a calcium carbonate suspension. The liquid mixtures containing the IR absorbing and scattering material are loaded onto the samples either by soaking or by spraying. The soaking is performed by pouring 240 ml of one of the liquid mixtures onto each sample and soaking the sample. The spraying is performed by using a spray bottle to spray 120 ml of one of the liquid mixtures onto each sample. The apparent thermal conductivity of each of the samples is measured before and after the IR absorbing material is added. The apparent thermal conductivities are shown in Table 1.

**Table 1**

| Sample | Fiberglass density (kg/m³) | IRM* or ground glass powder | Application Method | IRM* added to fiberglass vs virgin sample weight (wt%) | Apparent thermal conductivity** before addition of IRM* or ground glass powder | Reduction in apparent thermal conductivity through the addition of IRM* or ground glass powder |
|---|---|---|---|---|---|---|
| 1 | 8.71 | CaCO₃ | Soaking | 5.5% | 43.01 | 1.9% |
| 2 | 10.5 | CaCO₃ | Soaking | 13.3% | 41.26 | 2.2% |
| 3 | 7.02 | CaCO₃ | Soaking | 14.9% | 47.72 | 3.0% |
| 4 | 8.38 | CaCO₃ | Soaking | 23.0% | 44.23 | 4.9% |
| 5 | 9.12 | CaCO₃ | Soaking | 48% | 42.96 | 5.8% |
| 6 | 10.6 | Ground glass, same composition as the glass fiber | Soaking | 24% | 40.74 | 2.5% |
| 7 | 6.76 | Borax | Spraying | 3.1 % | 49.14 | 0.6% |
| 8 | 7.27 | Borax | Soaking | 8.6% | 47.64 | 1.7% |

| | | | | | | |
|---|---|---|---|---|---|---|
| * IRM = infrared absorbing and scattering material | | | | | | |
| ** Thermal conductivity units = (mW/m•°C) tested by ASTM C518 test method at 24°C mean temperature | | | | | | |

Table 1 shows that the addition of borax or calcium carbonate to FIBERGLASS results in a reduction in the apparent thermal conductivity of the insulation. For the samples with calcium carbonate, the percentage reduction in thermal conductivity is roughly proportional to the percentage of calcium carbonate applied to the FIBERGLASS.

Comparative samples showing the reduction in apparent thermal conductivity produced by adding glass fiber to insulation are provided by standard R11, R13 and R15 FIBERGLASS insulation, as shown in Table 2.

**Table 2**

| R-Value at 8.9 cm Thick | Density (kg/m³) | Added glass fiber relative to R11 (wt%) | Apparent thermal conductivity** before the addition of glass fiber | Reduction in thermal conductivity through addition of glass fiber (%) |
|---|---|---|---|---|
| R1 | 8.59 | - | 45.88 | - |
| R13 | 12.8 | 49.3 | 38.82 | 15.4 |
| R15 | 22.4 | 160.6 | 33.64 | 26.7 |

| | | | | |
|---|---|---|---|---|
| ** Thermal conductivity units = (mW/m•°C) tested by ASTM C518 test method at 24°C mean temperature | | | | |

### Example 2

Two sets of FIBERGLASS samples of varying compositions in a fiberglass insulation manufacturing process are prepared. The first set of samples is maintained as a reference. To the second set of samples is added 12 wt% calcium carbonate. The apparent thermal conductivity at 24°C mean temperature of each sample as a function of density is determined by ASTM test procedure C518 and shown in Table 4.

**Table 3**

| Fiberglass Density kg/m³ | Apparent thermal conductivity** standard product | Apparent thermal conductivity** standard product with 12 wt% CaCO₃ |
|---|---|---|
| 8.01 | 47.41 | 48.09 |
| 8.97 | 45.16 | 45.75 |
| 11.2 | 41.41 | 41.90 |
| 12.6 | 39.83 | 40.26 |
| 12.8 | 39.57 | 39.99 |
| 14.4 | 38.18 | 38.56 |

| | | |
|---|---|---|
| ** Thermal conductivity units = (mW/m•°C) tested by ASTM C518 test method at 24°C mean temperature | | |

Using the data in Table 3, the reduction in apparent thermal conductivity resulting from the addition of calcium carbonate is compared with the reduction in apparent thermal conductivity resulting from an increase in glass density in the FIBERGLASS insulation. The results are shown in Table 4.

**Table 4**

| Range over which glass density (kg/m³) increased 12% | Reduction in apparent thermal conductivity** from 12% increase in glass fiber density | Reduction in apparent thermal conductivity** from 12 wt% addition of CaCO₃ | Reduction in apparent thermal conductivity** by CaCO₃ compared to glass fiber |
|---|---|---|---|
| From 8.01 to 8.97 | 4.7% | 3.5% | 74% |
| From 11.2 to 12.6 | 3.8% | 2.8% | 74% |
| From 12.8 to 14.4 | 3.5% | 2.5% | 71% |

| | | | |
|---|---|---|---|
| **Thermal conductivity = (mW/m•°C) tested by ASTM C518 test method at 24°C mean temperature | | | |

Table 4 shows that the addition of 12 wt% calcium carbonate to FIBERGLASS is approximately 73% as effective as a 12% increase in FIBERGLASS density in reducing the apparent thermal conductivity of FIBERGLASS thermal insulation. Thus, about 1.37 (= 1/0.73) times as much calcium carbonate as glass fiber must be added to achieve the same reduction in apparent thermal conductivity.

However, the cost of calcium carbonate can be less than 50% of the cost of glass fiber. Thus, the cost for reducing the thermal conductivity of FIBERGLASS insulation with calcium carbonate can be 68% (= (100)(1.37)(0.50)) or less than that of the cost of the same thermal conductivity reduction with glass fiber. Thus, calcium carbonate is a more cost-effective additive to FIBERGLASS than glass fiber for reducing the apparent thermal conductivity of the thermal insulation.

### Example 3

A fiberglass insulation sample with 12 wt% calcium carbonate is prepared in a fiberglass manufacturing process. Table 5 shows the reduction in apparent thermal conductivity at various temperatures compared to a fiberglass insulation sample with no calcium carbonate.

**Table 5**

| Apparent thermal conductivity** test temperature (product density = 24 kg/m³) | Reduction in apparent thermal conductivity** from 12 wt% addition of CaCO₃ | Reduction in apparent thermal conductivity** by CaCO₃ compared to a 12 wt% weight increase with glass fiber |
|---|---|---|
| 10°C | 0.6% | 24% |
| 50°C | 4.6% | 132% |
| 400°C | 19.2% | 233% |

| | | |
|---|---|---|
| ** Thermal conductivity units = (mW/m•°C) tested by ASTM C518 test method. | | |

### Example 5

FIBERGLASS samples are prepared in a laboratory using hydrated alumina dispersed throughout as an IR absorbing and scattering material. The hydrated alumina is dispersed throughout the samples by spraying. The hydrated alumina is produced by ALCOA in the form of 1 µm particles (HYDRAL H710), 2 µm particles (HYDRAL H716), and 3.8 µm particles (B-303). The samples are 61 cm wide x 61 cm long x 2.5 cm thick. The apparent thermal conductivity at room temperature of each of the samples is measured before and after the hydrated alumina is added. The results are shown in Table 6.

**Table 6**

| IRM* | Fiberglass density without IRM* (kg/m³) | Fiberglass density with IRM* (kg/m³) | IRM* added (wt%) | Thermal conductivity** before addition of IRM* | Thermal conductivity** after addition of IRM* | Reduction in thermal conductivity** |
|---|---|---|---|---|---|---|
| HYDRAL H716 (2 µm) | 9.19 | 9.57 | 4.22% | 42.62 | 42.06 | -1.32% |
| " | 9.21 | 9.61 | 4.29% | 42.40 | 41.68 | -1.70% |
| " | 7.57 | 7.96 | 5.21 % | 45.31 | 44.48 | -1.84% |
| " | 11.19 | 11.58 | 3.43% | 39.66 | 39.28 | -0.98% |
| | | | Average: 4.29% | | | Average: -1.46% |
| HYDRAL H716 (2 µm) | 10.61 | 11.38 | 7.26% | 41.24 | 40.40 | -2.03% |
| " | 11.18 | 11.96 | 7.02% | 40.37 | 39.62 | -1.86% |
| " | 9.08 | 9.87 | 8.61% | 43.15 | 42.09 | -2.47% |
| " | 10.60 | 11.38 | 7.39% | 40.65 | 39.72 | -2.27% |
| | | | Average: 7.57% | | | Average: -2.16% |
| HYDRAL H710 (1 µm) | 6.92 | 7.29 | 5.39% | 46.17 | 45.37 | -1.72% |
| " | 7.95 | 8.38 | 5.37% | 43.97 | 43.43 | -1.25% |
| " | 8.96 | 9.38 | 4.72% | 42.13 | 41.68 | -1.06% |
| " | 8.47 | 8.89 | 4.93% | 43.47 | 42.82 | -1.49% |
| | | | Average: 5.10% | | | Average: -1.38% |
| HYDRAL H710 (1 µm) | 8.97 | 9.77 | 8.82% | 42.52 | 41.22 | -3.05% |
| " | 6.96 | 7.75 | 11.39% | 48.41 | 46.73 | -3.48% |
| " | 7.90 | 8.68 | 9.90% | 44.84 | 43.74 | -2.44% |
| " | 10.51 | 11.31 | 7.57% | 42.35 | 41.28 | -2.52% |
| | | | Average: 9.42% | | | Average: -2.87% |
| B-303 (3.8 µm) | 10.41 | 10.80 | 3.78% | 42.06 | 41.50 | -1.34% |
| " | 7.00 | 7.37 | 5.36% | 47.45 | 46.60 | -1.79% |
| " | 7.90 | 8.29 | 5.00% | 45.57 | 44.71 | -1.90% |
| " | 9.05 | 9.43 | 4.17% | 42.85 | 42.12 | -1.72% |
| | | | Average: 4.58% | | | Average: -1.69% |
| B-303 (3.8 µm) | 8.89 | 9.63 | 8.40% | 42.66 | 41.19 | -3.45% |
| " | 9.35 | 10.14 | 8.38% | 40.60 | 39.85 | -1.85% |
| " | 10.12 | 10.89 | 7.55% | 41.08 | 40.24 | -2.04% |
| " | 10.78 | 11.56 | 7.16% | 40.63 | 39.87 | -1.88% |
| | | | Average: 7.87% | | | Average: -2.30% |

| | | | | | | |
|---|---|---|---|---|---|---|
| * IRM = infrared absorbing and scattering material | | | | | | |
| ** Thermal conductivity units = (mW/m•°C) tested by ASTM C518 test method at 24°C mean temperature | | | | | | |

The results in Table 5 show that the addition of hydrated alumina particles to FIBERGLASS can reduce the room temperature thermal conductivity of the FIBERGLASS and thus improve the insulation properties of FIBERGLASS.

The thermal conductivity of FIBERGLASS samples with and without dispersed hydrated alumina in the form of 1 µm particles (HYDRAL H710) is measured at 300°C. The results are shown in Table 7. The data represents averaged values from eight samples having identical dimensions. One set of averaged values is from four of the samples containing dispersed hydrated alumina. The other set of averaged values is from four reference samples that do not include hydrated alumina particles.

**Table 7**

| | Density (kg/m³) | Temperature (°C) | Thermal conductivity** |
|---|---|---|---|
| Reference | 11.8 | 300 | 206.9 |
| Fiberglass with 9.4 wt% Hydral H710 (1µm) | 11.7 | 300 | 202.6 |

| | | | |
|---|---|---|---|
| ** Thermal conductivity units = (mW/m•°C) tested by the ISO 8302 (equivalent to ASTM C 177-85) test method at 300°C mean temperature | | | |

Table 7 shows that show that the addition of hydrated alumina particles to FIBERGLASS can reduce the 300°C thermal conductivity of the FIBERGLASS by about 2.1% and thus improve the high temperature insulation properties of the FIBERGLASS.

While the present invention has been described with respect to specific embodiments, it is not confined to the specific details set forth, but includes various changes acid modifications that may suggest themselves to those skilled in the art, all falling within the scope of the invention as defined by the following claims.

## Claims

1. A thermal insulation product comprising fibers ; and
an infrared absorbing and scattering material dispersed on the fibers, wherein the infrared absorbing and scattering material comprises at least one compound selected from the group consisting of carbonate compounds, borate compounds, and alumina compounds ;
the infrared absorbing and scattering material is in the form of particles and at least 99% of the particles have a particle size of less than 10 µm, and ; the product has a porous structure.

2. The product according to claim 1, wherein at least a portion of the infrared absorbing and scattering material is dispersed on fibers inside the thermal insulation product.

3. The product according to any one of claims 1 to 2, wherein the porous structure is nonwoven.

4. The product according to any one of claims 1 to 3, wherein the fibers are inorganic.

5. The product according to any one of claims 1 to 4, wherein the fibers comprise a glass.

6. The product according to any one of claims 1 to 5, wherein the product comprises the infrared absorbing and scattering material in an amount of from 1 to 40% by weight.

7. The product according to any one of claims 1 to 6, wherein the infrared absorbing and scattering material comprises a carbonate compound selected from the group consisting of calcium carbonate, dolomite and magnesite.

8. The product according to any one of claims 1 to 6, wherein the infrared absorbing and scattering material comprises a borate compound selected from the group consisting of borax and colemanite.

9. The product according to any one of claims 1 to 6, wherein the infrared absorbing and scattering material comprises hydrated alumina.

10. The product according to any one of claims 1 to 9, further comprising a binder selected from the group consisting of thermosetting polymers, thermoplastic polymers and inorganic compounds.

11. The product according to any one of claims 1 to 10, wherein the infrared absorbing and scattering material absorbs infrared radiation having a wavelength in a range of 4 to 40 µm.

12. The product according to claim 11, wherein the infrared absorbing and scattering material absorbs infrared radiation having a wavelength in a range of 6 to 8 µm.

13. Product according to any of claims 1 to 12, wherein the particle size of the infrared absorbing and scattering material is from 1 to 4 µm.

14. Product according to any of claims 1 to 13, wherein the infrared absorbing and scattering material is bound to the fibers with a binder.

15. Product according to any of claims 1 to 14, wherein 99% of the particles are less than 10 µm in size.

16. Use of an infrared absorbing and scattering material comprising at least one compound selected from the group consisting of carbonate compounds, borate compounds, and alumina compounds to improve the thermal resistance of a thermal insulation product comprising fibers, the infrared absorbing and scattering material being dispersed on the fibers,
wherein the product has a porous structure, and
the infrared absorbing and scattering material is in the form of particles and at least 99% of the particles have a particle size of less than 10 µm.

17. Use of an infrared absorbing and scattering material 1 comprising at least one compound selected from the group consisting of carbonate compounds and alumina compounds to improve the thermal resistance at a temperature of 300°C or more of a thermal insulation product comprising fibers, the infrared absorbing and scattering material being dispersed on the fibers,
wherein the product has a porous structure, and
the infrared absorbing and scattering material is in the form of particles and at least 99% of the particles have a particle size of less than 10 µm.

18. Use of an infrared absorbing and scattering material comprising at least one compound selected from the group consisting of carbonate compounds and alumina compounds to improve the thermal resistance at a temperature of 400°C or more of a thermal insulation product comprising fibers, the infrared absorbing and scattering material being dispersed on the fibers,
wherein the product has a porous structure, and
the infrared absorbing and scattering material is in the form of particles and at least 99% of the particles have a particle size of less than 10 µm.

19. Use according to any of claims 16 to 18, wherein the particle size of the infrared absorbing and scattering material is from 1 to 4 µm.

20. Use according to any of claims 16 to 19, wherein the infrared absorbing and scattering material is bound to the fibers with a binder.

21. Use according to any of claims 16 to 20, wherein 99% of the particles are less than 10 µm in size.

22. A method of forming a thermal insulation product, the method comprising :
dispersing on fibers an infrared absorbing and scattering material comprising at least one compound selected from the group consisting of carbonate compounds, borate compounds, and alumina compounds ; and
forming the fibers into a porous structure,
wherein the infrared absorbing and scattering material is in the form of particles and at least 99% of the particles have a particle size of less than 10 µm.

23. The method according to claim 22, wherein the infrared absorbing and scattering material comprises calcium carbonate.

24. The method according to any one of claims 22 and 23, wherein the dispersing comprises soaking or spraying the fibers with a liquid mixture containing the infrared absorbing and scattering material.

25. The method according to claim 24, wherein the infrared absorbing and scattering material is suspended in the liquid mixture.

26. The method according to any one of claims 22 to 25, wherein the infrared absorbing and scattering material is dispersed on the fibers after the fibers are formed into the porous structure.

27. The method according to any one of claims 22 to 25, wherein the dispersing comprises mixing the infrared absorbing and scattering material and the fibers.

28. The method according to claim 22, wherein the dispersing comprises
mixing the infrared absorbing and scattering material and the fibers ;
heating the infrared absorbing and scattering material ; and
binding the fibers together with the infrared absorbing and scattering material.

29. The method according to claim 28, wherein the mixing comprises sucking or blowing a dry powder of the infrared absorbing and scattering material into the porous structure.

30. The method according to claim 22, wherein the dispersing comprises mixing the infrared absorbing and scattering material, the fibers, and a binder.

31. The method according to claim 22, wherein the dispersing comprises :
mixing the infrared absorbing and scattering material and the fibers with a binder ;
heating the binder ; and
binding the fibers and the infrared absorbing and scattering material together with the binder.

32. The method according to claim 31, wherein the mixing comprises sucking or blowing the binder and a dry power of the infrared absorbing and scattering material into the porous structure.

33. The method according to claim 22, wherein the porous structure is nonwowen.

34. The method according to claim 22, wherein the fibers are inorganic.

35. The method according to claim 22, wherein the fibers comprise a glass.

36. The method according to claim 22, wherein the infrared absorbing and scattering material comprises a compound selected from the group consisting of carbonate compounds and alumina compounds.

37. The method according to claim 22, further comprising forming the porous structure into a pipe section comprising the infrared absorbing and scattering material and the fibers.

38. The method according to claim 37, wherein the infrared absorbing and scattering material is dispersed on the fibers before the porous structure is formed into the pipe section.

39. Method according to any of claims 22 to 38, wherein the particle size of the infrared absorbing and scattering material is from 1 to 4 µm.

40. Method according to any of claims 22 to 39, wherein 99% of the particles are less than 10 µm in size.

## Patentansprüche

1. Thermisch isolierendes Produkt, umfassend Fasern; und
ein Infrarot-absorbierendes und -streuendes Material, das auf den Fasern verteilt ist, wobei das Infrarot-absorbierende und -streuende Material wenigstens eine Verbindung umfaßt, ausgewählt aus der Gruppe bestehend aus Karbonatverbindungen, Boratverbindungen und Aluminiumoxidverbindungen;
wobei das Infrarot-absorbierende und -streuende Material in der Form von Partikeln vorliegt, und wenigstens 99% der Partikel eine Partikelgröße von weniger als 10µm haben, und das Produkt eine poröse Struktur hat.

2. Produkt nach Anspruch 1, wobei wenigstens ein Teil des Infrarot-absorbierenden und -streuenden Materials auf Fasern innerhalb des thermisch isolierenden Produkts verteilt ist.

3. Produkt nach einem der Ansprüche 1 bis 2, wobei die poröse Struktur ein Vliesstoff ist.

4. Produkt nach einem der Ansprüche 1 bis 3, wobei die Fasern anorganisch sind.

5. Produkt nach einem der Ansprüche 1 bis 4, wobei die Fasern ein Glas enthalten.

6. Produkt nach einem der Ansprüche 1 bis 5, wobei das Produkt das Infrarot-absorbierende und -streuende Material in einer Menge von 1 bis 40 Gewichtsprozent enthält.

7. Produkt nach einem der Ansprüche 1 bis 6, wobei das Infrarot-absorbierende und -streuende Material eine Karbonatverbindung enthält, ausgewählt aus der Gruppe bestehend aus Kalziumkarbonat, Dolomit und Magnesit.

8. Produkt nach einem der Ansprüche 1 bis 6, wobei das Infrarot-absorbierende und -streuende Material eine Boratverbindung enthält, ausgewählt aus der Gruppe bestehend aus Borax und Kolemanit.

9. Produkt nach einem der Ansprüche 1 bis 6, wobei das Infrarot-absorbierende und -streuende Material hydriertes Aluminiumoxid enthält.

10. Produkt nach einem der Ansprüche 1 bis 9, ferner umfassend einen Binder, ausgewählt aus der Gruppe bestehend aus wärmehärtenden Polymeren, thermoplastischen Polymeren und anorganischen Verbindungen.

11. Produkt nach einem der Ansprüche 1 bis 10, wobei das Infrarot-absorbierende und -streuende Material Infrarotstrahlung absorbiert, die eine Wellenlänge in einem Bereich von 4 bis 40µm hat.

12. Produkt nach Anspruch 11, wobei das Infrarot-absorbierende und -streuende Material Infrarotstrahlung absorbiert, die eine Wellenlänge in einem Bereich von 6 bis 8µm hat.

13. Produkt nach einem der Ansprüche 1 bis 12, wobei die Partikelgröße des Infrarot-absorbierenden und -streuenden Materials von 1 bis 4µm beträgt.

14. Produkt nach einem der Ansprüche 1 bis 13, wobei das Infrarot-absorbierende und -streuende Material mittels eines Binders an die Fasern gebunden ist.

15. Produkt nach einem der Ansprüche 1 bis 14, wobei 99% der Partikel eine Größe von weniger als 10µm haben.

16. Verwendung eines Infrarot-absorbierenden und -streuenden Materials, umfassend wenigstens eine Verbindung ausgewählt aus der Gruppe bestehend aus Karbonatverbindungen, Boratverbindungen und Aluminiumoxidverbindungen, zur Verbesserung der thermischen Widerstandsfähigkeit eines thermisch isolierenden Produkts, das Fasern enthält, wobei das Infrarot-absorbierende und -streuende Material auf den Fasern verteilt ist,
wobei das Produkt eine poröse Struktur hat, und
wobei das Infrarot-absorbierende und -streuende Material in Form von Partikeln vorliegt, und wenigstens 99% der Partikel eine Partikelgröße von weniger als 10µm haben.

17. Verwendung eines Infrarot-absorbierenden und -streuenden Materials, umfassend wenigstens eine Verbindung ausgewählt aus der Gruppe bestehend aus Karbonatverbindungen und Aluminiumoxidverbindungen zur Verbesserung der thermischen Widerstandsfähigkeit eines thermisch isolierenden Produkts, das Fasern enthält, bei einer Temperatur von 300°C oder mehr, wobei das Infrarot-absorbierende und -streuende Material auf den Fasern verteilt ist,
wobei das Produkt eine poröse Struktur hat, und
wobei das Infrarot-absorbierende und -streuende Material in Form von Partikeln vorliegt, und wenigstens 99% der Partikel eine Partikelgröße von weniger als 10µm haben.

18. Verwendung eines Infrarot-absorbierenden und -streuenden Materials, umfassend wenigstens eine Verbindung ausgewählt aus der Gruppe bestehend aus Karbonatverbindungen und Aluminiumoxidverbindungen zur Verbesserung der thermischen Widerstandsfähigkeit eines thermisch isolierenden Produkts, das Fasern enthält, bei einer Temperatur von 400°C oder mehr, wobei das Infrarot-absorbierende und -streuende Material auf den Fasern verteilt ist,
wobei das Produkt eine poröse Struktur hat, und
wobei das Infrarot-absorbierende und -streuende Material in Form von Partikeln vorliegt, und wenigstens 99% der Partikel eine Partikelgröße von weniger als 10µm haben.

19. Verwendung nach einem der Ansprüche 16 bis 18, wobei die Partikelgröße des Infrarot-absorbierenden und -streuenden Materials von 1 bis 4µm beträgt.

20. Verwendung nach einem der Ansprüche 16 bis 19, wobei das Infrarot-absorbierende und -streuende Material mittels eines Binders an die Fasern gebunden ist.

21. Verwendung nach einem der Ansprüche 16 bis 20, wobei 99% der Partikel eine Größe von weniger als 10µm haben.

22. Verfahren zur Bildung eines thermisch isolierenden Produkts, wobei das Verfahren umfaßt:
Verteilen eines Infrarot-absorbierenden und -streuenden Materials, umfassend wenigstens eine Verbindung ausgewählt aus der Gruppe bestehend aus Karbonatverbindungen, Boratverbindungen und Aluminiumoxidverbindungen, auf Fasern; und
Bilden der Fasern in eine poröse Struktur,
wobei das Infrarot-absorbierende und -streuende Material in Form von Partikeln vorliegt, und wenigstens 99% der Partikel eine Partikelgröße von weniger als 10 µm haben.

23. Verfahren nach Anspruch 22, wobei das Infrarot-absorbierende und -streuende Material Kalziumkarbonat enthält.

24. Verfahren nach einem der Ansprüche 22 und 23, wobei das Verteilen ein Tränken oder Besprühen der Fasern mit einer flüssigen Mischung umfaßt, die das Infrarot-absorbierende und -streuende Material enthält.

25. Verfahren nach Anspruch 24, wobei das Infrarot-absorbierende und -streuende Material in der flüssigen Mischung suspendiert ist.

26. Verfahren nach einem der Ansprüche 22 bis 25, wobei das Infrarot-absorbierende und -streuende Material auf den Fasern verteilt wird, nachdem die Fasern in die poröse Struktur gebildet worden sind.

27. Verfahren nach einem der Ansprüche 22 bis 25, wobei das Verteilen ein Mischen des Infrarot-absorbierenden und -streuenden Materials und der Fasern umfaßt.

28. Verfahren nach Anspruch 22, wobei das Verteilen umfaßt:
Mischen des Infrarot-absorbierenden und -streuenden Materials und der Fasern;
Erhitzen des Infrarot-absorbierenden und -streuenden Materials; und
Verbinden der Fasern zusammen mit dem Infrarot-absorbierenden und -streuenden Material.

29. Verfahren nach Anspruch 28, wobei das Mischen ein Saugen oder Blasen eines trockenen Pulvers des Infrarot-absorbierenden und -streuenden Materials in die poröse Struktur hinein umfaßt.

30. Verfahren nach Anspruch 22, wobei das Verteilen ein Mischen des Infrarot-absorbierenden und -streuenden Materials, der Fasern sowie eines Binders umfaßt.

31. Verfahren nach Anspruch 22, wobei das Verteilen umfaßt:
Mischen des Infrarot-absorbierenden und -streuenden Materials und der Fasern mit einem Binder;
Erhitzen des Binders; und
Binden der Fasern und des Infrarot-absorbierenden und -streuenden Materials zusammen mit dem Binder.

32. Verfahren nach Anspruch 31, wobei das Mischen ein Saugen oder Blasen des Binders und eines trockenen Pulvers des Infrarot-absorbierenden und -streuenden Materials in die poröse Struktur hinein umfaßt.

33. Verfahren nach Anspruch 22, wobei die poröse Struktur ein Vliesstoff ist.

34. Verfahren nach Anspruch 22, wobei die Fasern anorganisch sind.

35. Verfahren nach Anspruch 22, wobei die Fasern ein Glas enthalten.

36. Verfahren nach Anspruch 22, wobei das Infrarot-absorbierende und -streuende Material eine Verbindung enthält ausgewählt aus der Gruppe bestehend aus Karbonatverbindungen und Aluminiumoxidverbindungen.

37. Verfahren nach Anspruch 22, ferner umfassend das Bilden der porösen Struktur in einen Rohrabschnitt, der das Infrarot-absorbierende und -streuende Material und die Fasern enthält.

38. Verfahren nach Anspruch 37, wobei das Infrarot-absorbierende und -streuende Material auf den Fasern verteilt wird, bevor die poröse Struktur in den Rohrabschnitt gebildet wird.

39. Verfahren nach einem der Ansprüche 22 bis 38, wobei die Partikelgröße des Infrarot-absorbierenden und -streuenden Materials von 1 bis 4µm beträgt.

40. Verfahren nach einem der Ansprüche 22 bis 39, wobei 99% der Partikel eine Größe von weniger als 10µm haben.

## Revendications

1. Produit d'isolation thermique comprenant des fibres ; et
un matériau d'absorption et de diffusion des infrarouges dispersé sur les fibres, dans lequel le matériau d'absorption et de diffusion des infrarouges comprend au moins un composé choisi dans le groupe constitué par les composés de carbonate, les composés de borate et les composés d'alumine ;
le matériau d'absorption et de diffusion des infrarouges est sous la forme de particules et au moins 99% des particules ont une taille de particule inférieure à 10 µm, et ; le produit a une structure poreuse.

2. Produit selon la revendication 1, dans lequel au moins une partie du matériau d'absorption et de diffusion des infrarouges est dispersée sur des fibres à l'intérieur du produit d'isolation thermique.

3. Produit selon l'une quelconque des revendications 1 à 2, dans lequel la structure poreuse est non tissée.

4. Produit selon l'une quelconque des revendications 1 à 3, dans lequel les fibres sont inorganiques.

5. Produit selon l'une quelconque des revendications 1 à 4, dans lequel les fibres comprennent un verre.

6. Produit selon l'une quelconque des revendications 1 à 5, dans lequel le produit comprend le matériau d'absorption et de diffusion des infrarouges en une quantité de 1 à 40% en poids.

7. Produit selon l'une quelconque des revendications 1 à 6, dans lequel le matériau d'absorption et de diffusion des infrarouges comprend un composé de carbonate choisi dans le groupe constitué par le carbonate de calcium, la dolomie et la magnésite.

8. Produit selon l'une quelconque des revendications 1 à 6, dans lequel le matériau d'absorption et de diffusion des infrarouges comprend un composé de borate choisi dans le groupe constitué par le borax et la colémanite.

9. Produit selon l'une quelconque des revendications 1 à 6, dans lequel le matériau d'absorption et de diffusion des infrarouges comprend de l'alumine hydratée.

10. Produit selon l'une quelconque des revendications 1 à 9, comprenant en outre un agent liant choisi dans le groupe constitué par les polymères thermodurcissables, les polymères thermoplastiques et les composés inorganiques.

11. Produit selon l'une quelconque des revendications 1 à 10, dans lequel le matériau d'absorption et de diffusion des infrarouges absorbe un rayonnement infrarouge ayant une longueur d'onde dans une gamme de 4 à 40 µm.

12. Produit selon la revendication 11, dans lequel le matériau d'absorption et de diffusion des infrarouges absorbe un rayonnement infrarouge ayant une longueur d'onde dans une gamme de 6 à 8 µm.

13. Produit selon l'une quelconque des revendications 1 à 12, dans lequel la taille des particules du matériau d'absorption et de diffusion des infrarouges est de 1 à 4 µm.

14. Produit selon l'une quelconque des revendications 1 à 13, dans lequel le matériau d'absorption et de diffusion des infrarouges est lié aux fibres avec un agent liant.

15. Produit selon l'une quelconque des revendications 1 à 14, dans lequel 99% des particules ayant une taille inférieure à 10 µm.

16. Utilisation d'un matériau d'absorption et de diffusion des infrarouges comprenant au moins un composé choisi dans le groupe constitué par les composés de carbonate, les composés de borate et les composés d'alumine pour améliorer la résistance thermique d'un produit d'isolation thermique comprenant des fibres, le matériau d'absorption et de diffusion des infrarouges étant dispersé sur les fibres,
dans laquelle le produit a une structure poreuse, et
le matériau d'absorption et de diffusion des infrarouges est sous la forme de particules et au moins 99% des particules ont une taille de particule inférieure à 10 µm.

17. Utilisation d'un matériau d'absorption et de diffusion des infrarouges comprenant au moins un composé choisi dans le groupe constitué par les composés de carbonate et les composés d'alumine, pour améliorer la résistance thermique à une température de 300° C ou plus, d'un produit d'isolation thermique comprenant des fibres, le matériau d'absorption et de diffusion des infrarouges étant dispersé sur les fibres,
dans laquelle le produit a une structure poreuse, et
le matériau d'absorption et de diffusion des infrarouges est sous la forme de particules et au moins 99% des particules ont une taille de particule inférieure à 10 µm.

18. Utilisation d'un matériau d'absorption et de diffusion des infrarouges comprenant au moins un composé choisi dans le groupe constitué par les composés de carbonate et les composés d'alumine, pour améliorer la résistance thermique à une température de 400° C ou plus, d'un produit d'isolation thermique comprenant des fibres, le matériau d'absorption et de diffusion des infrarouges étant dispersé sur les fibres,
dans laquelle le produit a une structure poreuse, et
le matériau d'absorption et de diffusion des infrarouges se présente sous la forme de particules et au moins 99% des particules ont une taille de particule inférieure à 10 µm.

19. Utilisation selon l'une quelconque des revendications 16 à 18, dans laquelle la taille de particules du matériau d'absorption et de diffusion des infrarouges est de 1 à 4 µm.

20. Utilisation selon l'une quelconque des revendications 16 à 19, dans laquelle le matériau d'absorption et de diffusion des infrarouges est lié aux fibres avec un agent liant.

21. Utilisation selon l'une quelconque des revendications 16 à 20, dans laquelle 99% des particules ont une taille inférieure à 10 µm.

22. Procédé de formation d'un produit d'isolation thermique, le procédé comprenant :
la dispersion sur des fibres d'un matériau d'absorption et de diffusion des infrarouges comprenant au moins un composé choisi dans le groupe constitué par les composés de carbonate, les composés de borate et les composés d'alumine ; et
la formation des fibres en une structure poreuse,
dans lequel le matériau d'absorption et de diffusion des infrarouges se présente sous la forme de particules et au moins 99 % des particules ont une taille inférieure à 10 µm.

23. Procédé selon la revendication 22, dans lequel le matériau d'absorption et de diffusion des infrarouges comprend du carbonate de calcium.

24. Procédé selon l'une quelconque des revendications 22 et 23, dans lequel la dispersion comprend le trempage ou la pulvérisation des fibres avec un mélange liquide contenant le matériau d'absorption et de diffusion des infrarouges.

25. Procédé selon la revendication 24, dans lequel le matériau d'absorption et de diffusion des infrarouges est mis en suspension dans le mélange liquide.

26. Procédé selon l'une quelconque des revendications 22 à 25, dans lequel le matériau d'absorption et de diffusion des infrarouges est dispersé sur les fibres après que les fibres sont formées en la structure poreuse.

27. Procédé selon l'une quelconque des revendications 22 à 25, dans lequel la dispersion comprend le mélange du matériau d'absorption et de diffusion des infrarouges et des fibres.

28. Procédé selon la revendication 22, dans lequel la dispersion comprend
le mélange du matériau d'absorption et de diffusion des infrarouges et des fibres ;
le chauffage du matériau d'absorption et de diffusion des infrarouges ; et
la liaison des fibres ensemble avec le matériau d'absorption et de diffusion des infrarouges.

29. Procédé selon la revendication 28, dans lequel le mélange comprend l'aspiration ou le soufflage d'une poudre sèche du matériau d'absorption et de diffusion des infrarouges dans la structure poreuse.

30. Procédé selon la revendication 22, dans lequel la dispersion comprend le mélange du matériau d'absorption et de diffusion des infrarouges, des fibres et d'un agent liant.

31. Procédé selon la revendication 22, dans lequel la dispersion comprend :
le mélange du matériau d'absorption et de diffusion des infrarouges et des fibres avec un agent liant ;
le chauffage de l'agent liant ; et
la liaison des fibres et du matériau d'absorption et de diffusion des infrarouges ensemble avec un agent liant.

32. Procédé selon la revendication 31, dans lequel le mélange comprend l'aspiration ou le soufflage de l'agent liant et d'une poudre sèche du matériau d'absorption et de diffusion des infrarouges dans la structure poreuse.

33. Procédé selon la revendication 22, dans lequel la structure poreuse est non tissée.

34. Procédé selon la revendication 22, dans lequel les fibres sont inorganiques.

35. Procédé selon la revendication 22, dans lequel les fibres comprennent un verre.

36. Procédé selon la revendication 22, dans lequel le matériau d'absorption et de diffusion des infrarouges comprend un composé choisi dans le groupe constitué par les composés de carbonate et les composés d'alumine.

37. Procédé selon la revendication 22, comprenant en outre la formation de la structure poreuse en un tronçon de tuyau comprenant le matériau d'absorption et de diffusion des infrarouges et les fibres.

38. Procédé selon la revendication 37, dans lequel le matériau d'absorption et de diffusion des infrarouges est dispersé sur les fibres avant que la structure poreuse soit formée en un tronçon de tuyau.

39. Procédé selon l'une quelconque des revendications 22 à 38, dans lequel la taille de particule du matériau d'absorption et de diffusion des infrarouges est de 1 à 4 µm.

40. Procédé selon l'une quelconque des revendications 22 à 39, dans lequel 99% des particules ont une taille inférieure à 10 µm.
